(19) Europäisches Patentamt
European Patent Office
Office européen des brevets

(11) **EP 3 366 596 B1**

(12) **EUROPEAN PATENT SPECIFICATION**

(45) Date of publication and mention
of the grant of the patent:
**27.11.2019   Bulletin 2019/48**

(51) Int Cl.:
***B65B 31/02*** *(2006.01)*

(21) Application number: **17382098.6**

(22) Date of filing: **28.02.2017**

(54) **METHOD FOR VACUUM PACKAGING FOOD**

VERFAHREN ZUR VAKUUMVERPACKUNG VON LEBENSMITTELN

PROCÉDÉ D'EMBALLAGE SOUS VIDE DE PRODUITS ALIMENTAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2018   Bulletin 2018/35**

(73) Proprietor: **Immobles del Segria, S.L.
25123 Torrefarrera (Lerida) (ES)**

(72) Inventor: **Tornè Ficapal, Albert
25123 Torrefarrera (Lerida) (ES)**

(74) Representative: **Herrero & Asociados, S.L.
Cedaceros, 1
28014 Madrid (ES)**

(56) References cited:
**EP-A1- 1 564 147        US-A1- 2004 060 262
US-A1- 2012 110 956    US-A1- 2014 069 057**

## Description

The present invention relates to a method for vacuum packaging food, in particular, a chamber vacuum packaging machine.

## Background of the invention

Chamber vacuum packaging machines basically comprise a vacuum pump, a chamber where vacuuming takes place, a sealing system, electrovalves and an electronic or electro-mechanical control system. Such machines are for instance described in US 2014/0069057 A1, US 2012/0110956 A1, EP 1564147 A1 and US 2004/0060262 A1.

To vacuum package food with one of these packaging machines, the food is introduced into a bag, which is then introduced into the chamber of the packaging machine.

Next, the packaging machine extracts, by means of a vacuum pump, the air from the chamber until the user's desired level is reached. Once the air is extracted, the bag is then sealed and atmospheric pressure is restored in the chamber.

Since the bag containing the food has been sealed before atmospheric pressure is restored, it remains at the pressure desired by the user.

In the current state of the art, the sealing time for bags introduced into vacuum packaging machines is a value set by the user to obtain an optimal seal, making it possible for the sealing bar to have an appropriate temperature so that it closes the bag firmly and homogeneously.

The sealing time is the time during which the electrical contact that provides electricity to the sealing bar is closed so that this bar can heat up. This bar is an element of the packaging machine that is coupled to the cylinders or other lifting means in order to be able to seal the bag.

The sealing cycle begins once the chamber has reached the desired vacuum percentage. Then, the lifting cylinders are activated, pressing the sealing bar against the plastic bag, starting the sealing time. The bar has nichrome resistance that increases its temperature while the current passes through it. This isolated resistance is that which, upon coming in contact with the bag, and transmitting the heat that it generates, melts the plastic of the bag, sealing it and maintaining the vacuum percentage inside the bag once atmospheric pressure is restored.

The problem with using a time set by the user is that it cannot always be the most appropriate, since the sealing of the bag depends on the temperature of the sealing bar. If the initial temperature of the bar varies at the beginning at the sealing time, the temperature that is reached during the cycle is not always the same, meaning that the closure of the bag is not always the most appropriate.

This also means that it can cause overexertion and deterioration of the elements of the sealing bar, which can negatively affect its usability and durability.

Therefore, the objective of the present invention is to provide a method for vacuum packaging food in which overexertion and deterioration of the components of the packaging machine is not caused.

## Description of the invention

The method of the invention solves the drawbacks mentioned and has other advantages which are described below.

The method for vacuum packaging food according to the present invention is carried out by a vacuum packaging machine provided with a sealing bar and is characterized in that it comprises the following steps:

- start the vacuum packaging process;
- determine the time ($T_{sincelastseal}$) elapsed since the last vacuum packaging in the packaging machine;
- calculate a sealing time ($t_{seal}$) as a function of said time elapsed since the last packaging using a mathematical function;
- compare said sealing time ($t_{seal}$) with a pre-defined maximum sealing time ($maxt_{seal}$) and minimum sealing time ($mint_{seal}$);
- apply said calculated sealing time ($t_{seal}$) if it is less than said maximum sealing time ($maxt_{seal}$) and greater than said minimum sealing time ($mint_{seal}$), or apply said maximum sealing time ($max_{tseal}$) if the sealing time ($t_{seal}$) is greater than the maximum sealing time ($maxt_{seal}$), or apply said minimum sealing time ($mint_{seal}$) if the sealing time ($t_{seal}$) is less than the minimum sealing time ($mint_{seal}$); and
- continue the vacuum packaging process by applying the sealing time ($t_{seal}$) of the application step.

According to a preferred embodiment, calculating the sealing time ($t_{seal}$) as a function of said time elapsed since the last packaging is carried out through the following formula ($f(t)$):

$$f(t) = \ldots + K_{-2} \cdot t^{-2} + K_{-1} \cdot t^{-1} + K_0 + K_1 \cdot t + K_2 \cdot t^2 + \ldots = \sum_{n=-\infty}^{\infty} K_n \cdot t^n$$

where K represents constant values and $t$ is time.

Preferably, the step for determining the time ($T_{sincelastseal}$) elapsed since the last vacuum packaging in the packaging machine is carried out by consulting a time counter that tracks the time since the sealing bar of the packaging machine received current, such that said time counter restarts every time the sealing bar stops receiving current.

The method for vacuum packaging according to the present invention provides, at least, the following advantages:

As a consequence of this control algorithm of the sealing time, we have the following advantages:

- Independence of results according to the user:
  With the method according to the present invention, the operator does not have to introduce any sealing parameter during use of the machine. The sealing result is independent of the user's capacity to operate the machine.
- Optimization of the sealing time:
  Through the use of the control function, a sealing time is achieved which is better adjusted to the temperature conditions of the bar at any given time, decreasing the sealing time when necessary and therefore optimizing the total time of each cycle.
- Homogenization of the seals:
  By regulating the sealing time and adapting it to the temperature of the bar according to the previous seal cycles, more homogeneous sealing of the plastic bag is obtained for all conditions of use. By increasing and decreasing the time as appropriate, the sealing mark on the bags does not vary drastically if the machine has undergone many successive cycles or if it is the first seal cycle of the day, providing a more efficient and consistent result. It also prevents the bag from scorching or from not sealing completely nor correctly, thus preventing the apparatus from malfunctioning.
- Longer useful life of the sealing bar:
  By minimizing the sealing time, the useful life of sealing bars increases since the bars are no longer subjected to such high temperatures for such a long time, thus preventing the deterioration thereof. By decreasing the sealing time, the electrical contact between the lifting cylinders and the bar are also subjected to less force, thus increasing their possible operation cycles.

- Lower maintenance costs:
  It makes it possible to delay the substitution of sealing elements, and makes the deterioration thereof more unlikely.

**Brief description of the drawings**

For the purpose of helping to make the foregoing description more readily understandable, it is accompanied by a set of drawings which, schematically and by way of illustration and not limitation, represent an embodiment.

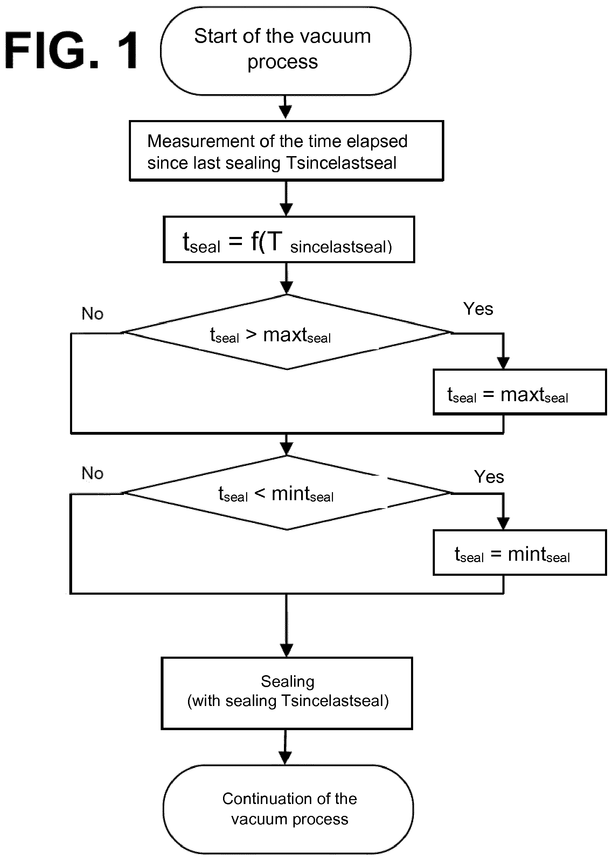

Figure 1 is a block diagram of the method for vacuum packaging food according to the present invention; and
Figure 2 is a graph that shows the function ($f(t)$) for calculating the sealing time ($t_{seal}$).

**Description of a preferred embodiment**

As indicated previously, the method according to the present invention applies to vacuum packaging machines. In particular, the packaging machine comprises control means that control the sealing time of the machine. This method detects previous sealing processes and modifies the sealing time as appropriate.

With the method according to the present invention, a sealing time ($t_{seal}$) that is suitable for each moment of use is provided, within maximum and minimum values ($maxt_{seal}$ and $mint_{seal}$), according to a function ($f(t)$) which has as a variable the time elapsed since the last sealing operation carried out by the packaging machine ($T_{sincelastseal}$). Preferably, these times are calculated with an accuracy down to the millisecond to optimize the method for vacuum packaging.

The first step of the method according to the present invention is to obtain the sealing time by using a mathematical function. Said function defines the ideal sealing time for each sealing cycle according to the time elapsed since the bar received current, and as a result its temperature has varied.

The function can be mathematically defined in many ways, since any function that relates both variables in a functional and correct way to resolve the proposed problem is valid, and each model, environment or type of operation has a specific function that has a better, more appropriate response. An example of expressing said function is the following:

$$f(t) = \ldots + K_{-2} \cdot t^{-2} + K_{-1} \cdot t^{-1} + K_0 + K_1 \cdot t + K_2 \cdot t^2 + \ldots = \sum_{n=-\infty}^{\infty} K_n \cdot t^n$$

In this formula, K represents constant values and $t$ is time.

The function should be calibrated to counteract the idle time of the bar, decreasing the sealing time if the bar has not had enough time to return to room temperature and still has a high temperature, or increasing the sealing time if enough time has elapsed and the bar has cooled down.

The values of the constants and the order of the function are what make it possible to better adapt the expression to each use, having a curve that corrects and adjusts the sealing time in the most accurate and correct way to maintain a constant temperature and without peaks in the bar.

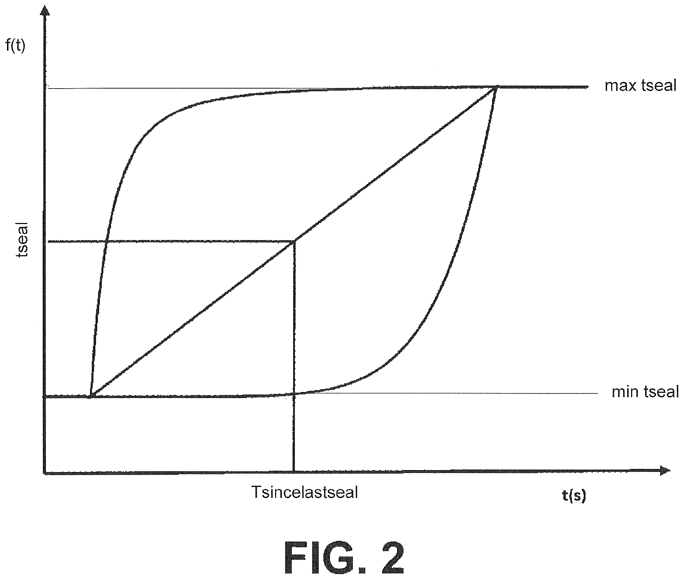

As understood from the previous function, by varying the value of the constants $K_n$ and the order of the function, different relationships between the sealing time and the time between sealing operations are obtained. Three different possibilities for these relationships are shown on the graph of figure 2.

Of all the possibilities and according to the current elements and conditions, the central function in figure 2 can be presented as a preferred option to control and adjust the sealing time of the vacuum packaging machines. This option is linear, with little demand for calculation by the processor, and it is relatively close to the desired function.

After modifying the sealing time with the function f(t), it is important to check that the value is between a maximum and minimum value that guarantees a correct operation of the sealing cycle.

If the value falls below a minimum temperature ($mint_{seal}$), it is set at said value, and the same occurs if it tries to rise above a maximum temperature ($maxt_{seal}$). These margins are obtained through experimentation that can be carried out by a person skilled in the art, and they ensure a strong and functional seal, without scorching or disabling the bag under all possibilities of use.

After this filter on the value of the sealing time $t_{seal}$, sealing begins. Once sealing during the calculated time ends, the vacuum process proceeds, and the counter that makes it possible to know the time elapsed between the sealing that just ended and the following packaging is restarted.

The aim of this control process is to decrease the value of the sealing time to a functional minimum if it has a high number of successive sealing cycles, trying to use the temperature of the bar which has still not dissipated from the same.

On the other hand, if the bar has had enough time to dissipate the temperature gained, said time is increased to ensure an optimal sealing.

To illustrate the invention more clearly, a numerical example tested in the current models of the vacuum packaging machine is shown. The algorithm was included in the control code of the packaging with the following parameters:

- A maximum packaging time ($maxt_{seal}$) of 4 seconds.
- A minimum packaging time ($maxt_{seal}$) of 2.5 seconds.
- A first-order function f(t), defined by $K_0 = 3/140$ and $K_1 = 145/70$.

$$f(t) = {}^{145}\!/_{70} + {}^{3}\!/_{140} \cdot t$$

The values of the constants of the function were calculated in this case by extrapolating values that were known to be optimal by means of experimentation and that, suitable for a first-order function, were adjusted to the requirements necessary for calculating the sealing time.

To test the efficiency of the algorithm, a standard bag was sealed with the bar at room temperature and one was sealed with the hot bar (heated by carrying out 60 successive packaging cycles without stopping). By comparing the two bags, it can be verified that the present invention evens out the sealing mark on the bag, preventing incorrect sealing, regulating the temperature of the bar and preventing the problems described above.

Even though reference has been made to a specific embodiment of the invention, it is evident for the person skilled in the art that numerous variations and changes may be made to the method described, and that all the aforementioned details may be substituted by other technically equivalent ones, without departing from the scope of protection defined by the attached claims.

**Claims**

1. A method for vacuum packaging food that is carried out by a vacuum packaging machine provided with a sealing bar, **characterized in that** it comprises the following steps:

   - start the vacuum packaging process;
   - determine the time ($T_{sincelastseal}$) elapsed since the last vacuum packaging in the packaging machine;
   - calculate a sealing time ($t_{seal}$) as a function of said time elapsed since the last packaging using a mathematical function;
   - compare said sealing time ($t_{seal}$) with a pre-defined maximum sealing time ($maxt_{seal}$) and minimum sealing time ($mint_{seal}$);
   - apply said calculated sealing time ($t_{seal}$) if it is less than said maximum sealing time ($maxt_{seal}$) and greater than said minimum sealing time ($mint_{seal}$), or apply said maximum sealing time ($maxt_{seal}$) if the sealing time ($t_{seal}$) is greater than the maximum sealing time ($maxt_{seal}$), or apply said minimum sealing time ($mint_{seal}$) if the sealing time ($t_{seal}$) is less than the minimum sealing time ($mint_{seal}$); and
   - continue the vacuum packaging process by applying the sealing time ($t_{seal}$) of the application step.

2. The method for vacuum packaging food according to claim 1, wherein calculating the sealing time ($t_{seal}$) as a function of said time elapsed since the last packaging is carried out through the following formula ($f(t)$):

$$f(t) = \ldots + K_{-2} \cdot t^{-2} + K_{-1} \cdot t^{-1} + K_0 + K_1 \cdot t + K_2 \cdot t^2 + \ldots = \sum_{n=-\infty} K_n \cdot t^n$$

   where $K$ represents constant values and $t$ is time.

3. The method for vacuum packaging food according to claim 1, wherein the step for determining the time ($T_{sincelastseal}$) elapsed since the last vacuum packaging in the packaging machine is carried out by consulting a time counter that tracks the time since the sealing bar of the packaging machine received current.

4. The method for vacuum packaging food according to claim 3, wherein said time counter restarts every time the sealing bar stops receiving the current.

**Patentansprüche**

1. Verfahren zum vakuumierten Verpacken von Lebensmitteln, welches von einer mit einer Siegelleiste versehenen Vakuum-Verpackungsmaschine durchgeführt wird; **dadurch gekennzeichnet, dass** das Verfahren die folgenden Schritte umfasst:

   - Starten des Vakuum-Verpackungsprozesses;
   - Feststellen der seit dem letzten Vakuum-Verpackungsvorgang in der Verpackungsmaschine verstrichenen Zeit ($T_{sincelastseal}$);
   - Berechnen einer Versiegelungszeit ($t_{seal}$) als Funktion der seit dem letzten Verpackungsvorgang verstrichenen Zeit unter Verwendung einer mathematischen Funktion;
   - Vergleichen der Versiegelungszeit ($T_{seal}$) mit einer vorher festgelegten Maximalversiegelungszeit ($maxt_{seal}$) und Minimalversiegelungszeit ($mint_{seal}$);
   - Anwenden der berechneten Versiegelungszeit ($t_{seal}$), wenn sie kürzer als die Maximalversiegelungszeit ($maxt_{seal}$) und länger als die Minimalversiegelungszeit ($mint_{seal}$) ist, oder Anwenden der Maximalversiegelungszeit ($maxt_{seal}$), wenn die Versiegelungszeit ($t_{seal}$) länger als die Maximalversiegelungszeit ($maxt_{seal}$) ist, oder Anwenden der Minimalversiegelungszeit ($mint_{seal}$), wenn die Versiegelungszeit ($t_{seal}$) kürzer als die Minimalversiegelungszeit ($mint_{seal}$) ist; und
   - Fortsetzen des Vakuum-Verpackungsprozesses durch Anwenden der Versiegelungszeit ($t_{seal}$) des Anwendungsschrittes.

2. Verfahren zum vakuumierten Verpacken von Lebensmitteln gemäß Anspruch 1, wobei das Berechnen der Versiegelungszeit ($t_{seal}$) als Funktion der seit der seit dem letzten Vakuum-Verpackungsvorgang verstrichenen Zeit durch die folgende Formel ($f(t)$)realisiert wird:

$$f(t) = \cdots + K_{-2} \cdot t^{-2} + K_{-1} \cdot t^{-1} + K_0 + K_1 \cdot t + K_2 \cdot t^2 + \cdots = \sum_{n=-\infty} K_n \cdot t^n$$

wobei $K$ konstante Werte darstellt und $t$ für Zeit steht.

3. Verfahren zum vakuumierten Verpacken von Lebensmitteln gemäß Anspruch 1, wobei der Schritt des Feststellens der seit dem letzten Vakuum-Verpackungsvorgang in der Verpackungsmaschine verstrichenen Zeit ($T_{sincelastseal}$) durch das Hinzuziehen eines Zeitzählers realisiert wird, welcher die Zeit erfasst, während der die Siegelleiste der Verpackungsmaschine bestromt wird.

4. Verfahren zum vakuumierten Verpacken von Lebensmitteln gemäß Anspruch 3, wobei der Zeitzähler jedes Mal neu startet, wenn die Siegelleiste nicht mehr bestromt wird.

**Revendications**

1. Procédé d'emballage sous vide d'aliments qui est réalisé par une machine d'emballage sous vide dotée d'une barre de scellement, **caractérisé en ce qu'**il comprend les étapes suivantes :

   - le démarrage du processus d'emballage sous vide ;
   - la détermination du temps ($T_{sincelastseal}$) écoulé depuis le dernier emballage sous vide dans la machine d'emballage ;
   - le calcul d'un temps de scellement ($t_{seal}$) en fonction dudit temps écoulé depuis le dernier emballage en utilisant une fonction mathématique ;
   - la comparaison dudit temps de scellement ($t_{seal}$) avec un temps de scellement maximum prédéfini ($maxt_{seal}$) et un temps de scellement minimum ($mint_{seal}$) ;
   - l'application dudit temps de scellement calculé ($t_{seal}$) s'il est inférieur audit temps de scellement maximum ($maxt_{seal}$) et supérieur audit temps de scellement minimum ($mint_{seal}$), ou l'application dudit temps de scellement maximum ($maxt_{seal}$) si le temps de scellement ($t_{seal}$) est supérieur au temps de scellement maximum ($maxt_{seal}$), ou l'application dudit temps de scellement minimum ($mint_{seal}$) si le temps de scellement ($t_{seal}$) est inférieur au temps de scellement minimum ($mint_{seal}$) ; et
   - la poursuite du processus d'emballage sous vide par application du temps de scellement ($t_{seal}$) de l'étape d'application.

2. Procédé d'emballage sous vide d'aliments selon la revendication 1, dans lequel le calcul du temps de scellement ($t_{seal}$) en fonction dudit temps écoulé depuis le dernier emballage est réalisé par la formule suivante (f(t)) :

$$F(T) = \ldots + K_{-2} \cdot T^2 + K_{-1} \cdot T^1 + K_0 + K_1 \cdot T + K_2 \cdot T^2 + \ldots = \sum_{n=-\infty} K_n \cdot t^n$$

où K représente des valeurs constantes et $t$ est le temps.

3. Procédé d'emballage sous vide d'aliments selon la revendication 1, dans lequel l'étape de détermination du temps ($T_{sincelastseal}$) écoulé depuis le dernier emballage sous vide dans la machine d'emballage est réalisée par consultation d'un compteur de temps qui suit le temps depuis que la barre de scellement de la machine d'emballage a reçu du courant.

4. Procédé d'emballage sous vide d'aliments selon la revendication 3, dans lequel ledit compteur de temps redémarre chaque fois que la barre de scellement arrête de recevoir le courant.

FIG. 1

Start of the vacuum process

↓

Measurement of the time elapsed since last sealing Tsincelastseal

↓

$t_{seal} = f(T_{sincelastseal})$

↓

No ← $t_{seal} > maxt_{seal}$ → Yes

$t_{seal} = maxt_{seal}$

↓

No ← $t_{seal} < mint_{seal}$ → Yes

$t_{seal} = mint_{seal}$

↓

Sealing
(with sealing Tsincelastseal)

↓

Continuation of the vacuum process

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140069057 A1
- US 20120110956 A1
- EP 1564147 A1
- US 20040060262 A1